Europäisches Patentamt

European Patent Office

Office européen des brevets

(11) Veröffentlichungsnummer: **0 286 916**
**A2**

(12) **EUROPÄISCHE PATENTANMELDUNG**

(21) Anmeldenummer: **88105165.0**

(22) Anmeldetag: **30.03.88**

(51) Int. Cl.4 **B23K 20/08 , B22D 19/00**

(30) Priorität: **14.04.87 CH 1437/87**

(43) Veröffentlichungstag der Anmeldung:
**19.10.88 Patentblatt 88/42**

(84) Benannte Vertragsstaaten:
**AT CH DE ES FR GB IT LI**

(71) Anmelder: **GEORG FISCHER
AKTIENGESELLSCHAFT
Mühlentalstrasse 105
CH-8201 Schaffhausen(CH)**

(72) Erfinder: **Gut, Karl
Hämmetlistrasse
CH-8463 Benken(CH)**
Erfinder: **Matejka, Wolfgang A.
Im Elsis
CH-8448 Uhwiesen(CH)**
Erfinder: **Gysel, Walter
Gugerhalde 4
CH-8207 Schaffhausen(CH)**
Erfinder: **Gerber, Urs
Neuhauserstrasse 4
CH-8247 Flurlingen(CH)**

(74) Vertreter: **Szilagyi, Marianne et al
c/o Georg Fischer Aktiengesellschaft
Patentabteilung
CH-8201 Schaffhausen(CH)**

(54) Verfahren zur Verdichtung von inneren Fehlstellen von Gussstücken.

(57) Bei dem Verfahren wird nach dem Lokalisieren der Fehlstellen jeweils an der Werkstückoberfläche über den Fehlstellen eine Sprengladung angebracht und zur Explosion gebracht.

Je nach Material kann das Werkstück bzw. die zu verformende Stelle vorgängig erwärmt werden. Die zu wählende Vorwärmtemperatur richtet sich nach der Sprödbruchtemperatur des Materials oder der günstigsten Warm-bzw. Umverformungstemperatur.

Damit können innere Fehlstellen rasch und wirksam verdichtet werden.

## Verfahren zur Verdichtung von inneren Fehlstellen von Gussstücken

Die Erfindung betrifft ein Verfahren zur nachträglichen Verdichtung von inneren Locker-bzw. Fehlstellen im Oberflächenbereich von gegossenen Komponenten.

Bei Stahlgussteilen, insbesondere bei grossen, mehreren Tonnen schweren Gussteilen, können durch ungleichmässige Abkühlung, knappe Sättigung, ungünstige Gussformen oder Gussmaterialinhomogenitäten Lockerstellen, Warmrisszonen oder andere Fehlstellen besonders im oberflächennahen Bereich vorkommen. Solche Fehlstellen, z.B. nicht vollständig ausgeheilte Warmrisse, d.h. mit kleinen, z.B. planar angeordneten Lockerstellen im Gefüge, können z.B. mit Ultraschallprüfungsverfahren festgestellt werden. Sind durch solche Fehlstellen die Festigkeit oder die Funktion des Gussteiles in Frage gestellt oder reduziert, ist das Teil als Ausschuss verloren oder die Fehlstellen müssen behoben werden.

Ein zu diesem Zweck bekanntes Verfahren besteht darin, an den entsprechenden Fehlstellen das Gussstück durch Schleifen oder Bearbeiten zu entfernen, die Aushaustellen mit Schweissen aufzufüllen und thermisch nachzubehandeln.

Dem erfindungsgemässen Verfahren liegt die Aufgabe zugrunde, auch grossflächige, nicht mit der Oberfläche in Verbindung stehende Fehlstellen nachträglich zu beheben, ohne direkt in das Gusstück eingreifen zu müssen, d.h. ein Verfahren zu schaffen, das äusserlich anwendbar ist.

Das Verfahren der eingangs genannten Art zeichnet sich erfindungsgemäss dadurch aus, dass die Fehlstellen lokalisiert werden, das Werkstück im Bereich der Fehlstellen lokal erwärmt wird und an der Oberfläche des Werkstückes über den Fehlstellen eine Sprengladung angebracht und zur Explosion gebracht wird.

Die gestellte Aufgabe wird somit unter Einsatz einer Sprengladung, z.B. einer Sprengstoffmasse zur nachträglichen Verdichtung der inneren Fehlstellen gelöst. Es hat sich gezeigt, dass wenn auf dem über den Fehlstellen liegenden Oberflächenbereich ein starker Impuls zur Einwirkung gebracht wird, die Fehlstellen im warmen oder kalten Zustand des Materials durch lokale Verformung in befriedigender Weise verdichtet werden können.

Bei einer besonders bevorzugten Ausführungsform des Verfahrens wird zwischen der Sprengladung und der Werkstückoberfläche eine möglichst plastisch verformbare, isolierende und feuerfeste Füllmasse eingelegt.

Zuerst müssen selbstverständlich die Fehlstellen gefunden und lokalisiert werden. Dies geschieht üblicherweise mittels Ultraschallprüfung, einem verbreiteten zerstörungsfreien Prüfverfahren zur Ermittlung von Rissen und Fehlstellen in Werkstücken.

Je nach Material kann das Gussstück dann vor der eigentlichen "Bearbeitung" im Bereich einer solchen Fehlstelle mit geeigneten Mitteln erwärmt werden. Die Vorwärmung kann aber auch z.B. bei austenitischen Werkstoffen entfallen. Beispielsweise er folgt die Erwärmung mittels Widerstandsheizung oder durch die Flamme eines Schweissbrenners, abhängig von der Form des Gussstückes und Lage sowie Grösse der Fehlstelle. Als besonders geeignet hat sich bei ferritischen Werkstoffen die Erwärmung des Fehlstellenbereiches auf 300° - 1000°C erwiesen. Die Wahl der Vorwärmtemperaturen wird in erster Linie beeinflusst durch die Lage der Sprödbruchtemperatur der zu verformenden Werkstoffe, d.h. die Vorwärmtemperatur sollte ca. 50 bis 100° C oberhalb der Sprödbruchtemperatur bzw. in der Hochlage der Kerbschlagarbeit liegen. Sie kann sich aber auch an der günstigsten Warm- bzw. Umverformungstemperatur des zu verformenden Werkstoffes orientieren.

Ueber der zu verformenden Stelle wird anschliessend die Sprengladung, z.B. in Form eines Sprengstoffpaketes angebracht. Um eine ideale Impulsübertragung vom detonierenden Sprengstoff auf das Gusstück zu erhalten, sollte die Sprengstoffmasse möglichst "luftfrei" mit dem Gusstück in Verbindung stehen.

Diese Verbindung erfolgt beispielsweise über eine Tonschicht, welche sich einerseits der flachen Unterseite der beispielsweise plattenförmig gepressten Sprengstoffmasse und andererseits der gegebenenfalls beliebig gewölbten oder strukturierten Oberfläche des Gustückes anpassen kann. Um die Sprengstoffmasse vor der Hitzeeinwirkung durch die erwärmte Gusstückoberfläche zu - schützen, wird vorzugsweise sowohl zwischen Werkstücksoberfläche und Tonschicht als auch zwischen der Tonschicht und der Sprengstoffmasse eine vorzugsweise aus Aluminium bestehende Folie als Wärmestrahlungs-und Feuchtigkeitsschutz eingelegt.

Die Tonschicht kann zusätzlich noch durch ein Draht-oder Glasfasergeflecht gestützt werden, welches z.B. etwa in der Mitte der Tonschicht zu liegen kommt.

Ein derart aufgebauter Ton-Sprengstoffmasse-Körper wird in der Praxis vorzugsweise seitlich durch einen Mantel umschlossen, dessen Höhe grösser als jene der Sprengstoffmasse mit Tonschicht ist. Die Sprengstoffmasse wird oben durch das Einlegen einer geeigneten Abschlussmasse, beispielsweise eines Deckels, abgedeckt, welche mit einer Aussparung zur Aufnahme des Zünders für die Sprengladung versehen ist. Dieser Zünder wird zuletzt eingebracht und ferngezündet.

Der Sprengstoff weist vorzugsweise eine Detonationsgeschwindigkeit auf, welche der Schallgeschwindigkeit im zu behandelnden Gusstück entspricht, also etwa um 5600 m/s bei ferritischen Stählen.

Die Ladungsdichte, d.h.Sprengstoffmasse pro Wirkfläche, liegt entsprechend der Fehlstellentiefe und -ausdehnung vorzugsweise zwischen 0,5 bis 1,5 g/cm². Somit können mit Sprengstoffmengen bis 200 g Fehlstellen grossflächig bis ca. 150 × 150 mm in einem Arbeitsgang verdichtet werden.

Die Wirkung kann beispielsweise durch eine anschliessend an die Explosionsverdichtung vorgenommene Ultraschallprüfung überprüft und das Verfahren gegebenenfalls mit geänderter Sprengstoffdosierung wiederholt werden, falls die Verdichtung nicht vollständig im ersten Arbeitsgang erfolgt ist.

Vorstehend wurde von einer Sprengladung in Form von eigentlichen Sprengstoffmassen ausgegangen. Es ist denkbar, dass anstelle solcher Sprengstoffmassen auch passende explosionsfähige Flüssigkeits-oder Gasvolumen eingesetzt werden könnten.

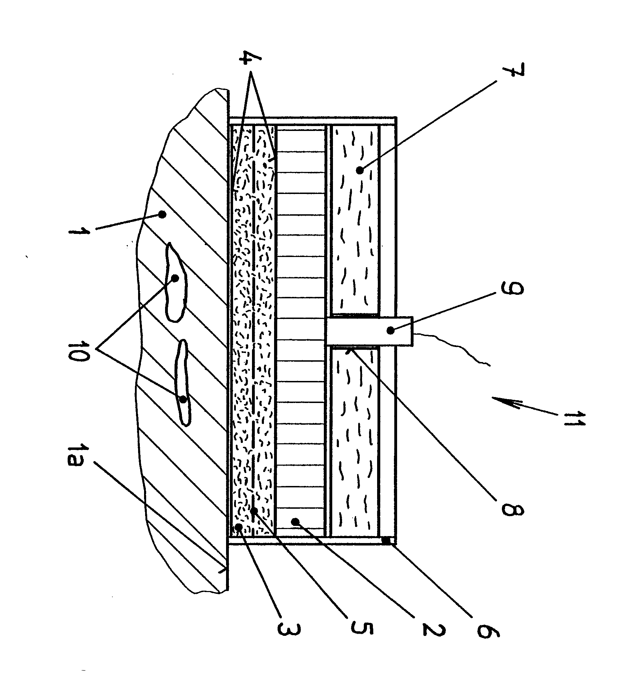

In der einzigen Figur der Zeichnung ist eine Ausführungsform einer Vorrichtung zur Durchführung des erfindungsgemässen Verfahrens, d.h. ein Explosionsverdichter, rein schematisch dargestellt.

Die Zeichnung zeigt das Gerät, d.h. den Explosionsverdichter 11 auf ein Gusstück 1 über einer Fehlstelle 10 aufgesetzt. Das Gerät 11, durch eine Ummantelung 6, z.B. aus Mineralfaser, seitlich begrenzt, weist als Wärmedämmungsmittel und Feuchtigkeitsschutz eine Folie 4 auf, welche direkt auf die Gusstückoberfläche 1a aufgelegt wird und direkt darüber eine Tonschicht 3 mit einem zu ihrer Stützung eingebrachten Draht-oder Glasfasergeflecht 5. Im weiteren ist eine Wärme-bzw. Feuchtigkeitsschutzfolie 4 zwischen die Tonschicht 3 und die Sprengstoffmasse 2 eingelegt sowie als oberer Abschluss eine Deckel 7 mit einer Oeffnung 8 zum Einbringen eines Zünders 9.

## Ansprüche

1. Verfahren zur Verdichtung von inneren Locker-bzw. Fehlstellen im Oberflächenbereich von gegossenen Werkstücken, dadurch gekennzeichnet, dass die Fehlstellen lokalisiert werden, dass an der Oberfläche des Werkstückkes über den Fehlstellen eine Sprengladung angebracht und zur Explosion gebracht wird.

2. Verfahren nach Anspruch 1, dadurch gekennzeichnet, dass das Werkstück im Bereich der Fehlstellen vor dem Sprengvorgang lokal erwärmt wird.

3. Verfahren nach Anspruch 1, dadurch gekennzeichnet, dass zwischen der eigentlichen Sprengladung und der Werkstoffoberfläche eine Füllmasse angeordnet wird.

4. Verfahren nach Anspruch 1 oder 3, dadurch gekennzeichnet, dass möglichst alle Hohlräume zwischen der Sprengladung und der Werkstoffoberfläche mit einer Füllmasse ausgefüllt werden.

5. Verfahren nach einem der Ansprüche 1 bis 4, dadurch gekennzeichnet, dass zwischen die Sprengladung und die Werkstoffoberfläche eine plastisch verformbare feuerfeste und isolierende Masse, beispielsweise eine Tonmasse, eingelegt wird.

6. Verfahren nach einem der Ansprüche 1 bis 5, dadurch gekennzeichnet, dass zwischen Sprengladung und Werkstückoberfläche ein Wärmeschutz angebracht wird.

7. Verfahren nach Anspruch 6, dadurch gekennzeichnet, dass der Wärmeschutz in Form von Strahlungsschutz-bzw. Feuchtigkeitsschutz-Folien zwischen Werkstück und Füllmasse und/oder zwischen Füllmasse und Sprengladung angebracht wird.

8. Verfahren nach einem der Ansprüche 3 bis 5, dadurch gekennzeichnet, dass die Füllmasse durch beispielsweise eingelegte Netze oder Geflechte gestützt wird.

9. Verwendung des Verfahrens nach einem der Ansprüche 1 bis 8 für die Verdichtung von inneren Fehl-bzw. Lockerstellen im Oberflächenbereich von Stahlgussstücken.

10.Verwendung des Verfahrens nach einem der Ansprüche 1 bis 9 zur Gefügeumformung zwecks Kornfeigung von Strukturen mit raumzentrierten Gitteranordnungen oder zwecks Härtesteigerung, oder zwecks Erzeugung von Druckeigenspannungen.